# EUROPÄISCHE PATENTANMELDUNG

(11) **EP 1 342 536 A1**
(43) Veröffentlichungstag der Anmeldung: **10.09.2003**
(21) Anmeldenummer: 03000932.8
(22) Anmeldetag: 16.01.2003
(51) Int. Cl.: B24B 5/42, B24B 41/06, B23B 5/18, B23C 3/06

(54) **Vorrichtung zur drehenden Mitnahme einer Kurbelwelle**

(30) Priorität: 02.03.2002 DE 10209300
(71) Anmelder: Hegenscheidt-MFD GmbH & Co. KG, 41812 Erkelenz (DE)
(72) Erfinder: Heimann, Alfred, Dr.-Ing., 52078 Aachen (DE)
(74) Vertreter: Cohausz & Florack

(57) **Zusammenfassung**

Die Erfindung betrifft eine Vorrichtung (1) zur drehenden Mitnahme einer Kurbelwelle (2) die mit ihren beiden axialen Enden (3, 4) jeweils zwischen Körnerspitzen (5, 6) einer spanabhebenden Werkzeugmaschine aufgenommen ist, die eine Planscheibe (7) hat. Die Mitnahme erfolgt durch eine Mitnahme (8), die mit der Planscheibe (7) verbunden oder verbindbar ist, sich parallel zur Drehachse (9) der Kurbelwelle (2) in einem seitlichen Abstand (10) zur Drehachse (9) über einen Abschnitt (11) der Länge der Kurbelwelle (2) erstreckt und an ihrem freien Ende (12) einen Mitnahmekörper (13) aufweist, der an einem Hubzapfen (14) der Kurbelwelle (2) angreift.

## Beschreibung

Die Erfindung betrifft eine Vorrichtung zur drehenden Mitnahme einer Kurbelwelle, die mit ihren beiden axialen Enden zwischen Körnerspitzen einer spanabhebenden Werkzeugmaschine aufgenommen ist, die eine Planscheibe hat.

Bei der Fertigbearbeitung von Kurbelwellen ist eine Einspannung in Körnerspitzen vorteilhaft, um die geforderten Rundlauf- und Planlaufgenauigkeiten der einzelnen Teile oder Abschnitte der Kurbelwelle einhalten zu können. Eine Einspannung zwischen Körnerspitzen ist allerdings für eine spanabhebende Bearbeitung, insbesondere im unterbrochenen Schnitt, sehr labil; die Kurbelwelle schwingt während der Bearbeitung und wird unzulässig wellig und ungenau. Unter spanabhebender Bearbeitung im Sinne der Erfindung wird das Drehen, Fräsen oder Drehräumen verstanden.

Eine spanabhebende Bearbeitung einer in einem Futter eingespannten Kurbelwelle ist erheblich steifer. Solange die zum Spannen der Kurbelwelle üblicherweise verwendeten Teile, wie zum Beispiel Zapfen oder Flansche, noch nicht fertigbearbeitet sind, ist die Verwendung von normalen Spannfuttern, die erheblich steifer Einspannen würden, nicht möglich. Eine denkbare Möglichkeit wäre die Verwendung von Ausgleichsfuttern, welche in einem Genauigkeitsbereich von 10 µ spannen könnten.

Daraus ergibt sich die Aufgabe für die Erfindung, die Mitnahme einer zwischen Körnerspitzen aufgenommenen Kurbelwelle möglichst so durchzuführen, dass auf die Kurbelwelle keine unnötigen Kräfte wirken und dort Verformungen hervorrufen, welche die Genauigkeit der bearbeiteten Kurbelwelle beeinträchtigen könnten. Insbesondere soll die Mitnahme einfach, betriebssicher und preisgünstig sein.

Zur Lösung der Aufgabe wird eine Mitnahme vorgeschlagen, die mit der Planscheibe einer Werkzeugmaschine verbunden oder verbindbar ist, sich parallel zur Drehachse der Kurbelwelle in einem seitlichen Abstand zur Drehachse über einen Abschnitt der Länge der Kurbelwelle erstreckt und an ihrem freien Ende einen Mitnahmekörper aufweist, der an einem Hubzapfen der Kurbelwelle angreift.

Die Mitnahme kann entweder mit der Planscheibe der Werkzeugmaschine dauerhaft fest verbunden sein oder kann, je nach Bedarf, vorübergehend mit der Planscheibe verbunden werden. Dabei ist es vorteilhaft, wenn die Mitnahme nicht an einem endseitigen Lager der Kurbelwelle sondern möglichst an einem in der axialen Mitte der Kurbelwelle gelegenen Hubzapfen angreift. Die Mitnahme ist so ausgestaltet, dass die fertig zu bearbeitenden Flächen beziehungsweise Abschnitte der Kurbelwelle, wie zum Beispiel Paßlager, Flansche, Kurbelwangen, von der Mitnahme nicht abgedeckt werden. Insbesondere ist die Erfindung dazu vorgesehen, die Paßlager einer Kurbelwelle zu bearbeiten beziehungsweise Zusatzarbeiten am Flansch oder endseitigen Zapfen der Kurbelwelle vorzunehmen. Vorteilhaft ist es, wenn die Mitnahme derart steif oder-technisch besser und daher kostengünstiger - in der Weise ausgewuchtet ist, dass bei den Drehzahlen der Bearbeitung keine wesentlichen Fliehkräfte und somit radiale Verlagerungen an der Kurbelwelle auftreten. Auch ist es vorteilhaft, wenn die Mitnahme mindestens das Dreifache der Biegesteifigkeit der Kurbelwelle aufweist.

Nach einer vorteilhaften Ausführungsform besitzt die Mitnahme eine Klemmung, die den Hubzapfen, in welchen die Mitnahmekraft eingeleitet wird, tangential klemmt und somit die Kurbelwelle in tangentialer und radialer Richtung mit der Mitnahme verbindet, wodurch das gesamte System Kurbelwelle und Mitnahme eine Versteifung erfährt. Die Klemmung kann durch ein von einem Druckmittel beaufschlagbares Kraftorgan von außen her erfolgen. Eine besonders einfache Art der Mitnahme wird allerdings durch einen Hebel erhalten, der unter der Fliehkraft der umlaufenden Mitnahme die Kurbelwelle klemmt. Auf diese Weise wird gewährleistet, dass durch die Klemmung an der Kurbelwelle keine radialen Verlagerungen auftreten können.

Nachfolgend wird die Erfindung an einem Ausführungsbeispiel näher beschrieben.

Es zeigen jeweils nicht maßstäblich und in großer Vereinfachung die
- Fig. 1 eine Vorrichtung in der Seitenansicht und
- Fig. 2 eine Vorrichtung in der Vorderansicht.

Eine Kurbelwelle 2 ist mit ihren beiden axialen Enden 3 und 4 jeweils zwischen Körnerspitzen 5 und 6 einer spanabhebenden Werkzeugmaschine (nicht gezeigt) aufgenommen. Die Werkzeugmaschine hat eine Planscheibe 7. Die Vorrichtung 1 zur drehenden Mitnahme der Kurbelwelle 2 weist eine Mitnahme 8 auf, die mit der Planscheibe 7 der Werkzeugmaschine (nicht gezeigt) entweder dauerhaft fest verbunden ist oder damit vorübergehend verbindbar ist.

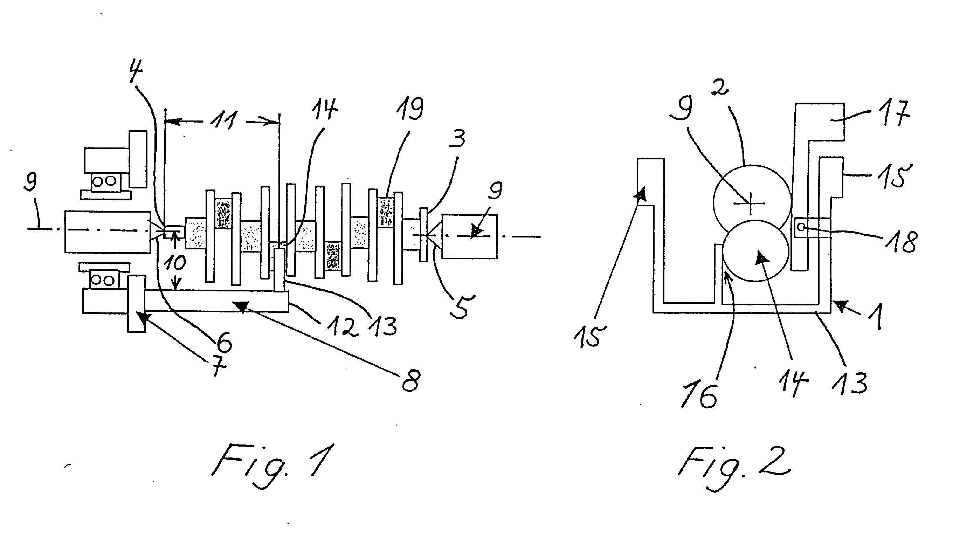

Die Mitnahme 8 erstreckt sich parallel zur Drehachse 9 der Kurbelwelle 2 über einen Abschnitt 11 der Länge der Kurbelwelle 2. Sie hat von der Drehachse 9 einen seitlichen Abstand 10 und weist an ihrem freien Ende 12 einen Mitnahmekörper 13 auf, der an einem der Hubzapfen 14 der Kurbelwelle 2 angreift. Wie in der Fig. 1 erkennbar, erstreckt sich die Mitnahme 8 annähernd über die halbe axiale Länge der Kurbelwelle 2. Der Längenabschnitt 11 kann aber auch größer oder kleiner gewählt werden, je nach dem wie es die Bearbeitungsverhältnisse erfordern.

Zur Vermeidung von Unwuchten, die durch die umlaufende Mitnahme 8 in der Werkzeugmaschine hervorgerufen werden könnten, sind Ausgleichsmassen 15 vorgesehen. Der Mitnahmekörper 13 der Mitnahme 8 weist eine Gleitfläche 16 auf an welcher der Hubzapfen 14 der Kurbelwelle 2 bei der drehenden Mitnahme zur Anlage kommt.

Zusätzlich zur Mitnahme über die Anlagefläche 16 kann eine Klemmung für den Hubzapfen 14 am Mitnahmekörper 13 vorgesehen sein. Eine solche Klemmung kann als Kraftorgan (nicht gezeigt) ausgebildet sein, welches von einem Druckmedium, beispielsweise Drucköl oder Druckluft, von außen her beaufschlagt werden kann. Eine recht einfache Art der Mitnahme ergibt sich durch einen Fliehkraft betätigten Klemmhebel 17. Beim Umlauf des Mitnahmekörpers 13 erzeugt der Klemmhebel 17 ein Klemmoment um seinen Drehpunkt 18. Diese Fliehkraftklemmung durch den Klemmhebel 17 ist für eine Mitnahme der Kurbelwelle 2 unter normalen Zerspanungskräften völlig ausreichend.

Anstelle der Mitnahme über einen in der Kurbelwellenmitte gelegenen Hubzapfen 14 kann die Mitnahme auch über einen Hubzapfen 19 erfolgen, der näher an einem der beiden äußeren Enden 3,4 der Kurbelwelle 2 liegt. Hierzu ist vorgesehen, dass die axiale Länge 11 der Mitnahme 8 veränderbar ist.

### Bezugszeichenliste

- 1: Vorrichtung
- 2: Kurbelwelle
- 3: axiales Ende
- 4: axiales Ende
- 5: Körnerspitze
- 6: Körnerspitze
- 7: Planscheibe
- 8: Mitnahme
- 9: Drehachse
- 10: seitlicher Abstand
- 11: Längenabschnitt
- 12: freies Ende
- 13: Mitnahmekörper
- 14: Hubzapfen
- 15: Ausgleichmasse
- 16: Gleitfläche
- 17: Klemmhebel
- 18: Drehpunkt
- 19: Hubzapfen

## Patentansprüche

1. Vorrichtung (1) zur drehenden Mitnahme einer Kurbelwelle (2), die mit ihren beiden axialen Enden (3, 4) jeweils zwischen Körnerspitzen (5, 6) einer spanabhebenden Werkzeugmaschine aufgenommen ist, die eine Planscheibe (7) hat, **gekennzeichnet durch**
- eine Mitnahme (8), die
- mit der Planscheibe (7) verbunden oder verbindbar ist,
- sich parallel zur Drehachse (9) der Kurbelwelle (2) in einem seitlichen Abstand (10) zur Drehachse (9) über einen Abschnitt (11) der Länge der Kurbelwelle (2) erstreckt und an ihrem freien Ende (12)
- einen Mitnahmekörper (13) aufweist, der an einem Hubzapfen (14) der Kurbelwelle (2) angreift.

2. Vorrichtung nach Anspruch 1, **dadurch gekennzeichnet , dass** sich die Mitnahme (8) annähernd über die halbe axiale Länge der Kurbelwelle (2) erstreckt.

3. Vorrichtung nach einem der Ansprüchen 1 oder 2, **dadurch gekennzeichnet, dass** die Mitnahme (8) Ausgleichsmassen aufweist (15).

4. Vorrichtung nach Anspruch 1, **dadurch gekennzeichnet, dass** der Mitnahmekörper (13) wenigstens eine Gleitfläche (16) für den Hubzapfen (14) der Kurbelwelle (2) hat.

5. Vorrichtung nach Anspruch 4, **dadurch gekennzeichnet, dass** der Mitnahmekörper (13) eine Klemmung für den Hubzapfen (14) der Kurbelwelle (2) hat.

6. Vorrichtung nach Anspruch 5, **dadurch gekennzeichnet, dass** die Klemmung ein von einem Druckmedium beaufschlagbares Kraftorgan ist.

7. Vorrichtung nach Anspruch 5, **dadurch gekennzeichnet, dass** die Klemmung ein fliehkraftbetätigter Klemmhebel (17) ist.

8. Vorrichtung nach Anspruch 1, **dadurch gekennzeichnet , dass** die axiale Länge (11) der Mitnahme (8) veränderbar ist.
